(19) Europäisches Patentamt

European Patent Office

Office européen des brevets

(11) Veröffentlichungsnummer: **0 408 948 A2**

(12) **EUROPÄISCHE PATENTANMELDUNG**

(21) Anmeldenummer: **90112416.4**

(22) Anmeldetag: **29.06.90**

(51) Int. Cl.⁵: **C08J 9/22**, //C08L23:10

(30) Priorität: **06.07.89 DE 3922207**

(43) Veröffentlichungstag der Anmeldung:
**23.01.91 Patentblatt 91/04**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **De Grave, Isidoor, Dr.**
**Mandelring 3**
**D-6706 Wachenheim(DE)**
Erfinder: **Haardt, Udo**
**Darmstaedter Strasse 132**
**D-6843 Biblis(DE)**
Erfinder: **Koegel, Wolfram**
**Eisenacher Weg 25**
**D-6800 Mannheim 31(DE)**
Erfinder: **Krueckau, Fritz Ernst**
**Waldstrasse 23**
**D-6719 Battenberg(DE)**
Erfinder: **Tatzel, Hermann**
**Brombeerweg 3**
**D-6940 Weinheim(DE)**

(54) **Verfahren zum Expandieren von geschrumpften Schaumstoffpartikeln aus Propylenpolymeren.**

㊼ Schaumstoffpartikel aus Propylenpolymeren, die auf 40 bis 95 % ihres ursprünglichen Volumens geschrumpft sind und eine Schüttdichte von 10 bis 30 g/l aufweisen, können expandiert werden, wenn man sie mit Luft oder Stickstoff unter Druck behandelt, anschließend entspannt, gegebenenfalls durch Erhitzen nachschäumt und nach dem Altern erneut mit Luft oder Stickstoff unter Druck behandelt, anschließend entspannt und unter Atmosphärendruck bis zum Druckabbau in den Zellen altert.

EP 0 408 948 A2

# VERFAHREN ZUM EXPANDIEREN VON GESCHRUMPFTEN SCHAUMSTOFFPARTIKELN AUS PROPYLENPOLYMEREN

Schaumstoffe auf Basis von Propylenpolymeren sind aufgrund ihrer Temperaturbeständigkeit und hervorragenden stoßdämpfenden Eigenschaften von großem technischem Interesse. Ihre Herstellung erfolgt in bekannter Weise durch Imprägnieren von Propylenpolymeren mit einem flüchtigen Treibmittel bei erhöhter Temperatur unter Druck und Entspannen des Gemisches. Vorzugsweise geht man dabei von Polymerpartikeln aus, die zu Schaumstoffpartikeln aufschäumen. Durch Verschweißen der Schaumstoffpartikel können beliebige Formkörper hergestellt werden. Dazu werden die Schaumstoffpartikel mit einem Gas unter Druck behandelt, so daß die Zellen einen Überdruck aufweisen und die Partikel beim anschließenden Erhitzen in der Form unter Ausdehnung und Ausfüllung der Zwischenräume miteinander verschweißen. Bei einer anderen Arbeitsweise werden die Schaumstoffteilchen durch Druckanwendung komprimiert und unter Überdruck in eine Form eingefüllt, erhitzt und anschließend entspannt, wobei sie miteinander verschweißen.

Bei den bekannten Verfahren werden als Treibmittel Fluorchlorkohlenwasserstoffe eingesetzt. Man vermutet, daß derartige Treibmittel die Umwelt belasten, da sie die Ozonschicht der Atmosphäre beeinträchtigen.

Es wurde auch schon vorgeschlagen, Kohlenwasserstoffe als Treibmittel zu verwenden.

In der Praxis hat sich jedoch gezeigt, daß in frisch hergestellten Schaumstoffpartikeln der in den Zellen enthaltene gasförmige Kohlenwasserstoff, z.B. Butan, schneller herausdiffundiert als die Umgebungsluft in die Zellen hineindiffundiert. Dies führt zu einem Unterdruck in den Zellen, der ein beträchtliches Schrumpfen der Schaumstoffpartikel bewirkt, wenn die Zellwände eine ungenügende Festigkeit aufweisen. Dies ist insbesondere bei Schaumstoffpartikeln mit niedriger Dichte der Fall.

Der Erfindung liegt die Aufgabe zugrunde, das ursprüngliche Volumen von geschrumpften Schaumstoffpartikeln aus Propylenpolymeren wiederherzustellen und gegebenenfalls die Partikel noch weiter zu expandieren.

Überraschenderweise wurde nun gefunden, daß man aus geschrumpften Schaumstoffpartikeln pralle Schaumstoffpartikel erhält, wenn man sie mit einem Überdruck an Luft oder Stickstoff behandelt und anschließend entspannt und unter Atmosphärendruck altert.

Es wurde weiterhin gefunden, daß man geschrumpfte Schaumstoffpartikel expandieren kann, wenn man sie mit einem Überdruck an Luft oder Stickstoff behandelt, anschließend entspannt, kurzzeitig durch Erhitzen nachschäumt, durch Altern erneut schrumpfen läßt nochmals mit einem Überdruck an Luft oder Stickstoff behandelt und anschließend entspannt und unter Atmosphärendruck altert.

Gegenstand der Erfindung ist somit ein Verfahren zum Expandieren von auf 40 bis 95 % ihres ursprünglichen Volumens geschrumpften Schaumstoffpartikeln aus propylenpolymeren der Schüttdichte 10 bis 30 g/l, die unter Verwendung von $C_3$- bis $C_5$-Kohlenwasserstoffen als Treibmittel hergestellt worden sind, dadurch gekennzeichnet, daß man die geschrumpften Partikel eine ausreichende Zeit bei einer mindestens 20°C unterhalb der Erweichungstemperatur liegenden Temperatur mit Luft oder Stickstoff unter einem Überdruck von 0,5 bis 10 bar behandelt, sie anschließend auf Atmosphärendruck entspannt, wobei sie ihr ursprüngliches Volumen wieder annehmen, und sie unter Atmosphärendruck altert, bis ein vollständiger Druckabbau in den Zellen eingetreten ist.

Propylenpolymere sind Polypropylen und Copolymere mit Ethylen, Buten-1 und anderen $\alpha$-Olefinen, die 0,5 bis 20 Mol.%, vorzugsweise 1 bis 10 Mol.% Comonomere enthalten. Sowohl statistische als auch Block-Copolymere sind geeignet. Vorzugsweise besitzen die Propylenpolymeren einen Metalindex MI (230°C, 2,16 kg) zwischen 2 und 12, gemessen nach DIN 53 735.

Zur Herstellung der Schaumstoffpartikel werden in an sich bekannter Weise die P-ropylenpolymeren zweckmäßig in Form von partikeln mit einem mittleren Durchmesser von 0,5 bis 5 mm, vorzugsweise 0,6 bis 2 mm, in wäßriger Suspension mit 0,1 bis 0,4, vorzugsweise 0,15 bis 0,3 kg pro kg Polymeren, eines $C_3$- bis $C_5$-Kohlenwasserstoffs, wie Propan, Butan, Isobutan, n-Pentan, Isopentan und/oder Neopentan bei Temperaturen etwa zwischen 5°C bis 20°C unter dem Erweichungspunkt des Polymeren unter Druck imprägniert und anschließend unter Aufschäumen entspannt.

Die Schaumstoffpartikel weisen im allgemeinen einen mittleren Durchmesser zwischen 3 und 15 mm auf.

Die gemäß der Erfindung zu behandelnden Schaumstoffpartikel besitzen eine Schüttdichte von 10 bis 30 g/l, entsprechend einer Dichte des Schaumstoffs von etwa 15 bis 50 g/l. Sie sind auf 40 bis 95 % ihres ursprünglichen Volumens geschrumpft. Der Schrumpfungsgrad kann leicht dadurch bestimmt werden, daß man die Partikel mit Unterdruck behandelt, sie nehmen dabei ihr ursprüngliches Volumen wieder ein. Sie schrumpfen allerdings sofort wieder, wenn der Unterdruck aufgehoben wird.

Zum Regenerieren des ursprünglichen Volumens werden die geschrumpften Teilchen im allgemeinen zwischen Raumtemperatur (20° C) und einer mindestens 20° C, vorzugsweise mindestens 30° C unterhalb der Erweichungstemperatur des Polymeren liegenden Temperatur mit Luft oder Stickstoff unter einem Überdruck von 0,5 bis 10 bar, insbesondere 1 bis 8 bar eine ausreichende Zeit, im allgemeinen 5 bis 500 Minuten lang behandelt. Der optimale Zeitraum je nach Druck und Temperatur läßt sich leicht durch Vorversuche ermitteln.

Nach der Druckbehandlung werden die Teilchen auf Atmosphärendruck entspannt und anschließend bei Atmosphärendruck solange gealtert, bis ein vollständiger Druckabbau in den Zellen eingetreten ist.

Die geschrumpften Teilchen erhalten durch diese Behandlung ihr ursprüngliches Volumen zurück. Überraschenderweise tritt nach dem Abkühlen bei der weiteren Lagerung kein wesentliches Schrumpfen auf.

Es ist aber auch möglich, die geschrumpften Teilchen über ihr ursprüngliches Volumen hinaus weiter zu expandieren. Da erhitzt man die mit Druck behandelten Partikel nach dem Entspannen, während der Überdruck in den Zellen noch mindestens 0,25 bar, vorzugsweise 0,3 bis 3, insbesondere 0,5 bis 2,5 bar beträgt, kurzfristig auf die Erweichungstemperatur oder bis zu 30° C darüber, wobei sie nachschäumen. Man läßt die Partikel dann durch Alterung erneut auf etwa 50 bis 90 % des Nachschäumvolumens schrumpfen und behandelt sie erneut eine ausreichende Zeit bei einer mindestens 20° C unterhalb der Erweichungstemperatur liegenden Temperatur mit Luft oder Stickstoff unter einem Überdruck von 0,5 bis 10 bar, wobei sie ihr ursprüngliches Nachschäumvolumen wieder annehmen und läßt sie unter Atmosphärendruck altern, bis ein vollständiger Druckabbau in den Zellen eingetreten ist.

Die nach dem Verfahren der Erfindung erhaltenen Schaumstoffpartikel können in an sich bekannter Weise in Formen zu Formkörpern verschweißt werden. Dabei werden Formkörper erhalten, die sich durch eine wesentlich niedrigere Dichte im Vergleich zu den aus geschrumpften Partikeln erhaltenen auszeichnen.

Die in den Beispielen genannten Teile sind Gewichtsteile.

Beispiel 1

In einem Druckgefäß werden 100 Teile eines Ethylen-Propylen-Copolymeren (Ethylengehalt 2,3 Gew.%, Erweichungstemperatur 147° C, Meltindex 9,5, mittleres Korngewicht 1,2 mg) 22 Teile Butan, 224 Teile Wasser und 5 Teile Tricalciumphosphat als Dispergierhilfsmittel unter Rühren 1,2 Stunden auf 133° C erhitzt und anschließend, während der Druck im Kessel durch Nachpressen mit Stickstoff auf 21 bar konstant gehalten wird, durch ein Bodenventil ausgetragen und entspannt. Man erhält Schaumstoffpartikel der Schüttdichte 13 g/dm³ mit einem mittleren Durchmesser von 4,5 mm.

Nach 24-stündiger Lagerung ist ein Volumenschrumpf auf 68 % des ursprünglichen Volumens eingetreten (Schüttdichte 19 g/dm³).

Die geschrumpften Partikel werden 4 Stunden bei 75° C mit einem Überdruck von 1 bar Luft behandelt und danach entspannt. Beim anschließenden Lagern bei Raumtemperatur ist nach etwa 1,5 Stunden ein vollständiger Druckabbau in den Zellen eingetreten. Die Schüttdichte beträgt jetzt 14,4 g/dm³.

Die Partikel werden nun druckpneumatisch in eine vorgeheizte Formkammer eingefüllt, wobei während der Befüllung ein Staudruck in der Form von 1,75 bar aufrechterhalten wird. Die Form wird beidseitig 8 Sekunden lang mit Dampf von 160° C beheizt. Anschließend wird entspannt, mit wasser gekühlt, die Form geöffnet und das Formteil entnommen. Die Dichte des Formkörpers beträgt 26 g/dm³. Der Formkörper zeigt eine hervorragende Verschweißung.

Geht man dagegen bei der Formteilherstellung von den geschrumpften Partikeln aus ohne vorherige Druckbehandlung, so zeigt das Formteil eine Dichte von 36 g/dm³. Die Verschweißung ist unbefriedigend.

Beispiel 2

Man arbeitet wie in Beispiel 1, verwendet jedoch als Treibmittel 24 Teile Butan.

Die Schüttdichte der Schaumstoffpartikel unmittelbar nach der Herstellung beträgt 11,5 g/dm³, nach 24 stündiger Lagerung 18,5 g/dm³, nach der Druckbehandlung und anschließende Alterung 12 g/dm³.

Die Dichte des Formteils, hergestellt aus druckbehandelten und gealterten Partikeln beträgt 19 g/dm³.

Im Vergleich dazu beträgt die Dichte des Formteils, hergestellt aus geschrumpften Partikeln 34 g/dm³.

Beispiel 3

Man arbeitet wie in Beispiel 1. Die Druckbehandlung erfolgt jedoch 2 Stunden bei 85° C mit einem Überdruck von 4 bar Stickstoff.

Die Schüttdichte der druckbehandelten und gealterten Partikel beträgt 12,5 g/dm³, die Formteildichte 20 g/dm³.

Beispiel 4

Man arbeitet wie in Beispiel 1, verwendet jedoch ein Propylen-Butylen-Copolymeres mit einem Butylengehalt von 5,4 Gew.%.

Die Schüttdichte der Partikel unmittelbar nach der Herstellung beträgt 27 g/dm³, nach der Druckbehandlung und Alterung 23,5 g/cm³. Die Dichte des Formteils beträgt 40,5 g/dm³.

Im Vergleich dazu beträgt die Dichte des aus geschrumpften Partikeln hergestellten Formteils 54 g/dm³.

Beispiel 5

Man arbeitet wie in Beispiel 1. Die Druckbehandlung erfolgt 3 Stunden bei 85°C mit einem Überdruck von 5 bar Luft. Innerhalb von 5 Minuten nach der Entspannung, während der Überdruck in den Zellen der Partikel noch 1,8 bar beträgt, werden die Partikel 8 Sekunden lang mit Dampf von 165°C erhitzt, wobei sie weiter aufschäumen zu einer Schüttdichte von 7 g/dm³. Nach 24-stündiger Lagerung schrumpfen die Partikel auf eine Schüttdichte von 12,5 g/dm³. Sie werden danach erneut 2 Stunden bei 80°C mit einem Überdruck von 4 bar Luft behandelt und nach dem Entspannen 12 Stunden bei Raumtemperatur gelagert, um den Druck in den Zellen abzubauen.

Die entsprechend Beispiel 1 daraus hergestellten Formteile zeigen eine Dichte von 13 g/dm³. Die Verschweißung ist hervorragend.

Beispiel 6

Analog der Arbeitsweise des Beispiels 1 werden unter Verwendung eines Ethylen-Propylen-Copolymeren mit einem Ethylengehalt von 2,2 Gew.% und 21,5 Teilen Butan Schaumstoffpartikel der Schüttdichte 12,5 g/dm³ hergestellt. Nach 24-stündiger Lagerung beträgt die Schüttdichte 20 g/dm³. Nach der Druckbehandlung mit Stickstoff (90°C, 3,5 bar Überdruck, 2,5 Stunden) und einer Ablagerungszeit bei Raumtemperatur von 2 Stunden zum Druckabbau werden aus den Schaumstoffpartikeln (Schüttdichte 13,7 g/dm³) analog der Arbeitsweise in Beispiel 1 Formteile hergestellt (Dichte 22,5 g/dm³). Die Formteile zeigen eine gute Kantenausbildung, eine glatte Oberfläche, eine hohe Verschweißungsgüte und einen linearen Schrumpf von weniger als 0,4 %.

Bei einer Druckbehandlung mit Luft bei 95°C (4 bar Überdruck, 4 Stunden) und einer Ablagerungszeit bei Raumtemperatur von 3 Stunden zum Druckabbau erhält man Schaumstoffpartikel der Schüttdichte 13,0 g/dm³. Daraus hergestellte Formteile der Dichte 20,3 g/dm³ zeigen gute Kantenausbildung, eine glatte Oberfläche, hohe Verschweißungsgüte und lineare Ausdehnung von 0,9%.

Ohne Druckbehandlung können aus den geschrumpften Schaumstoffpartikeln nur Formteile der Dichte 36,2 g/dm³ hergestellt werden. Diese zeigen eine unregelmäßige Kantenausbildung, eine noppige Oberfläche, mangelhafte Verschweißung und einen linearen Schrumpf von mehr als 1,5 %.

Beispiel 7

Analog der Arbeitsweise des Beispiels 1 werden unter Verwendung von 100 Teilen eines Ethylen-Propylen-Copolymeren mit einem Ethylengehalt von 2,6 Gew.% und 20 Teilen Butan Schaumstoffpartikel der Schüttdichte 12,7 g/dm³ hergestellt. Nach 24-stündiger Lagerung hat sich durch Schrumpfung die Schüttdichte auf 19 g/dm³ erhöht.

Aus den geschrumpften Partikeln hergestellte Formteile der Dichte 26 g/dm³ zeigen eine unregelmäßige Kantenausbildung, eine eingefallene Oberfläche und einen linearen Schrumpf von 10 %.

Behandelt man die geschrumpften Partikel 4 Stunden lang bei 90°C mit Stickstoff unter einem Überdruck von 4 bar, so sinkt die Schüttdichte auf 12,8 g/dm³. Diese Partikel werden anschließend (innerhalb von 5 Minuten nach der Druckbehandlung) 8 Sekunden lang mit Dampf von 165°C behandelt, wobei sie weiter aufschäumen zu einer Schüttdichte von 7,4 g/dm³. Nach 12-stündiger Lagerung bei Raumtemperatur sind sie erneut geschrumpft auf eine Schüttdichte von 11 g/dm³. Sie werden nun erneut-bei 85°C 2 Stunden lang mit 4 bar Überdruck Stickstoff behandelt. Nach dem Druckabbau durch 2stündiges Lagern bei Raumtemperatur beträgt die Schüttdichte 7,5 g/dm³. Aus diesen Partikeln hergestellte Formteile zeigen eine Dichte von 13 g/dm³, eine gute Kantenausbildung, glatte Oberfläche und einen linearen Schrumpf von weniger als 1 %.

**Ansprüche**

1. Verfahren zum Expandieren von auf 40 bis 95 % ihres ursprünglichen Volumens geschrumpften Schaumstoffpartikeln aus Propylenpolymeren der Schüttdichte 10 bis 30 g/l, die unter Verwendung von C₃- bis C₅-Kohlenwasserstoffen als Treibmittel hergestellt worden sind, dadurch gekennzeichnet, daß man die geschrumpften Partikel eine ausreichende Zeit bei einer mindestens 20°C unterhalb der Erweichungstemperatur liegenden Temperatur mit Luft oder Stickstoff unter einem Überdruck von 0,5 bis 10 bar behandelt, sie anschließend auf Atmosphärendruck entspannt, wobei sie ihr ursprüngliches Volumen wieder annehmen, und sie unter Atmosphärendruck altert, bis ein vollständiger Druckabbau in den Zellen eingetreten ist.

2. Verfahren gemäß Anspruch 1, dadurch gekennzeichnet, daß man die Partikel vor der Stufe des Altern unter Atmosphärendruck, während der Überdruck in den Zellen mindestens 0,25 bar beträgt, kurzzeitig auf Temperaturen oberhalb der Erweichungstemperatur erhitzt, wobei sie nachschäumen, und, nachdem sie durch Alterung erneut auf etwa 50 bis 90 % des Nachschäum-Volumens geschrumpft sind, erneut eine ausreichende Zeit bei einer mindestens 20°C unterhalb der Erweichungstemperatur liegenden Temperatur mit Luft oder Stickstoff unter einem Überdruck von 0,5 bis 10 bar behandelt, sie erneut entspannt, wobei sie ihr ursprüngliches Nachschäumvclumen wieder annehmen, und sie unter Atmosphärendruck altert, bis ein vollständiger Druckabbau in den Zellen eingetreten ist.